# EUROPÄISCHE PATENTSCHRIFT

(11) **EP 2 718 587 B1**
(45) Veröffentlichungstag und Bekanntmachung des Hinweises auf die Patenterteilung: **03.04.2019**
(21) Anmeldenummer: 12722316.2
(22) Anmeldetag: 09.05.2012
(51) Int. Cl.: F16F 15/12

(54) **ANTRIEBSSYSTEM FÜR EIN FAHRZEUG**
DRIVE SYSTEM FOR A VEHICLE
SYSTÈME DE PROPULSION POUR VÉHICULE

(30) Priorität: 07.06.2011 DE 102011077120; 10.04.2012 DE 102012205792
(43) Veröffentlichungstag der Anmeldung: 16.04.2014
(73) Patentinhaber: ZF Friedrichshafen AG, 88046 Friedrichshafen (DE)
(72) Erfinder: ORLAMÜNDER, Andreas, 97453 Schonungen (DE); LORENZ, Daniel, 97688 Bad Kissingen (DE); KÜHNER, Michael, 74078 Heilbronn (DE); DÖGEL, Thomas, 97720 Nüdlingen (DE)
(86) Internationale Anmeldenummer: PCT/EP2012/058560
(87) Internationale Veröffentlichungsnummer: WO 2012/168025

(56) Entgegenhaltungen:
- EP-A2- 1 239 130
- DE-A1- 10 018 955
- DE-A1-102009 052 202
- US-A1- 2007 037 659

## Beschreibung

Die vorliegende Erfindung betrifft ein Antriebssystem für ein Fahrzeug umfassend eine Brennkraftmaschine und eine Drehschwingungsdämpfungsanordnung, wobei die Brennkraftmaschine zwischen Betriebsarten unterschiedlicher Leistungsfähigkeit umschaltbar ist.

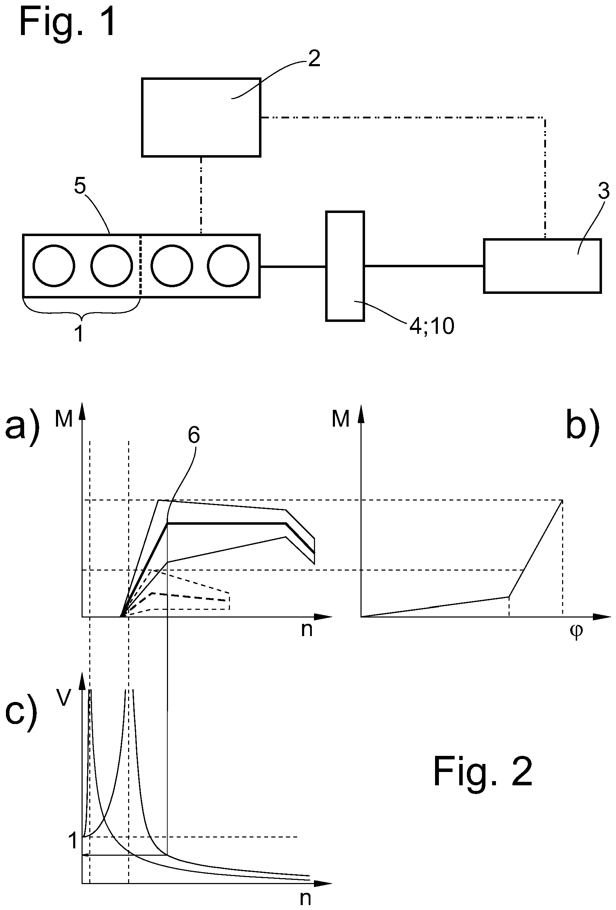

Ein in Fig. 1 prinzipartig dargestelltes Antriebssystem umfasst einen Verbrennungsmotor 5, der aufgrund des periodischen Verbrennungsprozesses ein ungleichförmiges Drehmoment abgibt. Dadurch ist dem Nennmoment ein Störmoment mit festen Ordnungen überlagert. Diese Ordnungen hängen vom Verbrennungsprozess (2- oder 4-Taktverfahren) und von der Zylinderanzahl ab. So ist die hauptanregende Ordnung eines 4-Zylinder-4-Takt-Motors die zweite Ordnung, die eines 3-Zylinder-4-Takt-Motors die 1,5te, die eines 4-Zylinder-2-Takt-Motors die zweite Ordnung.

Das System weist ein Steuergerät 2 auf, das anhand von Signalen, wie Beispielsweise der Fahrgeschwindigkeit, aus dem Motor oder dem Restantriebsstrang 3 (Getriebe, Differential, Achse) erkennt, welcher Last- und Drehzahlzustand am Motor herrscht, und daraufhin wählt, ob alle oder nur ein Teil der Zylinder betrieben werden soll bzw. welches Brennverfahren im Motor verwendet werden soll, allgemein also eine Auswahl trifft zwischen Betriebsarten unterschiedlicher Leistungsfähigkeit.

Um einen Antriebsstrang zu beruhigen, werden Schwingungsreduzierungssysteme 4, als Drehschwingungsdämpfungsanordnungen, eingesetzt, die z.B. bezogen auf die Anregungsordnung ausgelegt werden. Dabei konnte man bislang von im Betrieb unveränderlichen festen Ordnungen ausgehen.

Aus dem Grund der Verbrauchs- und damit auch Emissionsreduzierung bietet es sich an, im Betrieb die Anzahl der Zylinder oder das Brennverfahren, also die Betriebsart, zu verändern. Ein Verbrennungsmotor hat seinen optimalen Wirkungsgrad immer bei verhältnismäßig hoher Last, so dass hier der spezifische Kraftstoffverbrauch am geringsten ist. Die im realen Betrieb häufigen Teillastzustände verbrauchen bezogen auf die abgerufene Leistung zu viel Kraftstoff.

Eine Lösung dieses Problems besteht darin, einzelne Zylinder 1 abzuschalten und die verbleibenden Zylinder auf einem höheren Last- und damit Wirkungsgradniveau zu betreiben. Diese Abschaltung kann beispielsweise dadurch erfolgen, dass die Kraftstoffeinspritzung bei der Hälfte der Zylinder ausgesetzt wird und/oder die Steuerzeiten über eine variable Ventilsteuerung verändert werden.

Die alternative Lösung zu einer Zylinderabschaltung besteht darin, einen Viertakt-Motor für den Teillastbetrieb optimal auszulegen und bei Bedarf an Spitzenlast in den Zweitakt-Betrieb umzuschalten.

Insbesondere im verbrauchsrelevanten Zyklus werden bezogen auf den Vollmotor nur sehr kleine Lasten abgerufen; so gibt der Motor im NEFZ (Neuer Europäischer Fahrzyklus) nur ca. 10 kW bei einer installierten Leistung von bis zu 200 kW ab, da die geforderten Beschleunigungen sehr moderat sind. Auch im Alltagsbetrieb eines Fahrzeuges wird nur in seltenen Fällen die volle Last abgerufen, so dass eine Zylinderabschaltung oder eine Arbeitsverfahrenumschaltung großes Einsparpotential bieten.

Wenn sich die Anregungsordnung ändert, dann ändert sich auch bezogen auf die Drehzahl oder Frequenz der Abstand des Betriebsbereiches von der Eigenfrequenz des Schwingungsreduzierungssystems und damit die Güte der Schwingungsreduzierung.

Die DE 10 2009 052 202 A1 bezieht sich auf einen Torsionsschwingungsdämpfer, die DE 100 18 955 A1 auf ein Schwingungsdämpfersystem und die US 2007/0037659 A1 auf einen Zahnrad-basierten Drehmomentwandler mit einer Mehrplattenkupplung und einem Planetenradsatz. Die DE10 08 287 A1 und die EP 1 239 130 A2 offenbaren Brennkraftmaschinen, die zwischen Betriebsarten unterschiedlicher Leistungsfähigkeit umschaltbar sind.

Es ist die Aufgabe der vorliegenden Erfindung ein Antriebssystem so auszulegen, dass bei sich im Betrieb änderndem Anregungsverhalten eine stets gute Schwingungsreduzierungsgüte gewährleistet ist.

Erfindungsgemäß wird diese Aufgabe durch ein Antriebssystem gemäß Anspruch 1 gelöst.

Weitere vorteilhafte Ausgestaltungsvarianten sind Gegenstand der Unteransprüche.

Die Erfindung wird nachfolgend mit Bezug auf die beiliegenden Figuren detailliert beschrieben. Es zeigt:
- Fig. 1: in prinzipartiger Darstellung ein Antriebssystem;
- Fig. 2a): aufgetragen über der Drehzahl, das von dem Verbrennungsmotor in einer Betriebsart mit maximaler Leistungsfähigkeit und einer Beriebsart mit verringerter Leistungsfähigkeit abgebbare Drehmoment;
- Fig. 2b): eine Winkel-Drehmoment-Kennlinie einer Drehschwingungsdämpfungsanordnung mit ungünstiger Kennlinienauslegung;
- Fig. 2c): aufgetragen über der Drehzahl, die Übertragungsfunktion der Drehschwingungsdämpfungsanordnung mit den Resonanzstellen zweier Dämpferstufen;
- Fig. 3a): eine der Fig. 2a) entsprechende Darstellung;
- Fig. 3b): eine der Fig. 2b) entsprechende Darstellung einer Kennlinie einer Drehschwingungsdämpferanordnung mit günstiger Kennlinienauslegung;
- Fig. 3c): eine der Fig. 2c) entsprechende Darstellung der Übertragungsfunktionen für den Fall einer günstigen Kennlinienauslegung;
- Fig. 4: aufgetragen über der Drehzahl, die Übertragungsfunktion eines drehzahladaptiven Tilgers;
- Fig. 5: in ihren Darstellungen a) bis d) in Entsprechung zu Fig. 3 den Drehmomentenverlauf, den Kennlinienverlauf und die Übertragungsfunktionen für den Fall einer günstigen Kennlinienauslegung in einer Betriebsart mit höherer Leistungsfähigkeit und einer Betriebsart mit geringerer Leistungsfähigkeit;
- Fig. 6: verschiedene Beispiele der Auslegung von Steifigkeiten einer Drehschwingungsdämpfungsanordnung, welche von dem zu übertragenden Drehmoment abhängig sind;
- Fig. 7: einen der Fig. 5c) entsprechenden Kennlinienverlauf;
- Fig. 8: einen stufenlosen, progressiv zunehmenden Kennlinienverlauf;
- Fig. 9: in prinzipartiger Darstellung eine Drehschwingungsdämpfungsanordnung;
- Fig. 10: eine Drehschwingungsdämpfungsanordnung in konstruktiver Ausführung, dargestellt im Längsschnitt;
- Fig. 11: in prinzipartiger Darstellung die Integration einer Drehschwingungsdämpfungsanordnung in einen hydrodynamischen Drehmomentwandler.

Ein Tiefpassfilter lässt das Moment mit niedriger Frequenz/Ordnung durch (z. B. ideal nur das Nennmoment mit 0-ter Ordnung) und sperrt die Wechselmomente höherer Ordnung bzw. Frequenz. Dies wird realisiert durch ein schwingungsfähiges Zweimassensystem (ZMS) mit einer Primärseite und einer gegen die Wirkung einer Dämpferelementenanordnung, z.B. Federanordnung, bezüglich der Primärseite drehbaren Sekundärseite, das eine Eigenfrequenz besitzt, bei der, wenn diese angeregt wird, das System sehr hohe Winkelausschläge macht. Das bedeutet im besten Fall störende Geräusche und im schlimmsten Fall seine Zerstörung. Daher sind die Systeme bezüglich ihrer Massen-Steifigkeits-Verhältnisse so ausgelegt, dass diese Eigenfrequenz weit unterhalb der Leerlaufdrehzahl und damit des Betriebsdrehzahlbereiches liegt. Beispielsweise liegt die Eigenfrequenz eines Zweimassenschwungrades bei ca. 750/min.

Wird dieses Zweimassenschwunggrad mit einem 4-Zylinder-4-Takt-Motor betrieben, so ist die niedrigste Anregungsfrequenz bei einer Leerlaufdrehzahl von 750/min durch die 2. Ordnung als Hauptanregende bei ca. 1600/min also weit oberhalb der Resonanz des Zweimassenschwungrades. Hierbei nutzt der Umstand, dass weit oberhalb der Resonanz aufgrund der Übertragungsfunktion die Amplituden hinter dem System kleiner sind als vor dem System. Das Zweimassenschwungrad entkoppelt und reduziert die Anregung, die an den Restantriebsstrang, wie z.B. das Getriebe, weitergegeben wird und zu Geräusch führen kann.

Wird bei diesem Motor nun die Anzahl der Zylinder halbiert, halbiert sich auch die Ordnung der Hauptanregenden von der 2. auf die 1. Ordnung. Dadurch liegt die niedrigste Anregungsfrequenz bei einer Leerlaufdrehzahl von 750/min bei 800/min und damit im Bereich der Resonanzfrequenz des Zweimassenschwungrades. Die Amplituden werden sehr groß und das System entkoppelt nicht.

Die Lösung der Anhebung der Leerlaufdrehzahl im Abschaltbetrieb ist zwar maschinendynamisch sinnvoll, hat aber den Nachteil, dass die geschwindigkeitsproportionalen hydrodynamischen Verluste zunehmen und der Motor nicht mehr im Bereich des optimalen Wirkungsgrades betrieben wird.

Aus diesem Grund muss das Schwingungsreduzierungssystem speziell abgestimmt werden.

In Fig. 2 ist dargestellt, wie sich eine übliche Auslegung einer Drehschwingungsdämpfungsanordnung, wie z.B. Zweimassenschwunggrad, auf das Verhalten bei Zylinderabschaltung auswirkt. In Fig. 2b) ist eine progressive Drehmoment-Winkel-Kennlinie dargestellt, die eine Knickstelle hat, bei der die Steifigkeit stark zunimmt. Die erste Stufe ist beispielsweise eine Leerlauf- oder Niedriglaststufe. In den beiden Kennlinienabschnitten unter und über der Knickstelle hat die Kennlinie jeweils einen im Wesentlichen linearen Verlauf.

In Fig. 2a) ist mit der durchgezogenen dicken Linie das Nennmoment eines 4-Zylinder-Motors über der Drehzahl dargestellt. Die einhüllenden durchgezogenen dünnen Linien stellen die Amplituden des überlagerten Wechselmoments dar und repräsentieren somit das maximale bzw. minimale Drehmoment. Im Vergleich mit der Zweimassenschwungradkennlinie sieht man, dass bei Volllast die zweite Stufe des Zweimassenschwungrades wirkt. Die durchgezogene dicke Linie stellt das Nennmoment ohne Zylinderabschaltung, also in einer Betriebsart mit höherer bzw. maximaler Leistungsfähigkeit, dar.

Die dicke gestrichelte Linie in Fig. 2a) stellt den Nennmomentenverlauf des zylinderabgeschalteten Motors dar, bei dem nur noch 2 Zylinder arbeiten. Dementsprechend steht auch nur noch näherungsweise das halbe Moment zur Verfügung. Diesem Nennmoment wird ebenfalls ein Störmoment überlagert, dessen Amplitude die gestrichelte dünne Einhüllende darstellt. Üblicherweise wird der Abschaltbetrieb nicht über das gesamte Drehzahlband des Motors angewendet.

Bedingt durch die Auslegung der Kennlinie reicht die weiche erste Stufe aber für das Nennmoment im Zylinderabschaltbetrieb nicht aus, so dass das Zweimassenschwungrad in seiner zweiten Stufe betrieben wird.

Die Entkopplungsgüte hängt in beiden Fällen -Vollzylinderbetrieb und Abschaltbetrieb- vom drehzahlbezogenen Abstand von der Resonanz des Zweimassenschwungrades ab.

Im Vollzylinderbetrieb wird das Zweimassenschwungrad nach wie vor aufgrund der Hauptanregungsordnung (2. Ordnung) überkritisch betrieben. In der in Fig. 2c) dargestellten Übertragungsfunktion ist sichtbar, dass das Amplitudenverhältnis < 1 ist, wenn man beispielsweise die Drehzahl an der Stelle 6 betrachtet, indem man das Lot bei der Drehzahl fällt, bis man auf die Übertragungsfunktion der zweiten Stufe trifft.

Wird bei dem Motor eine Zylinderabschaltung vorgenommen, so reduziert sich die hauptanregende Ordnung beispielsweise auf die Hälfte. Anstelle der 2. Ordnung wird die 1. Ordnung relevant. Deshalb muss in Fig. 2c) eine Ordnungsanpassung vorgenommen werden; man trifft so bei halbierter Drehzahl auf die Übertragungsfunktion der zweiten Stufe des Zweimassenschwungrades in der Nähe der Resonanz - hier sogar unterkritisch - bei einem wesentlich größerem Amplitudenverhältnis, was sich trotz der niedrigeren Momentenamplitude im Zylinderabschaltbetrieb in einer inakzeptabel schlechten Entkopplungsgüte auswirkt.

Grund für das schlechte Verhalten ist die sehr flache erste Stufe, so dass im Zylinderabschaltbetrieb auch in der zu steifen zweiten Stufe gefahren wird.

Eine Lösung besteht darin, dass die erste Stufe der Kennlinie so steif ausgeführt wird, dass einerseits der Zylinderabschaltbetrieb immer in der ersten Stufe stattfindet und andererseits die Steifigkeit noch so gering ist, dass überkritischer Betrieb möglich ist.

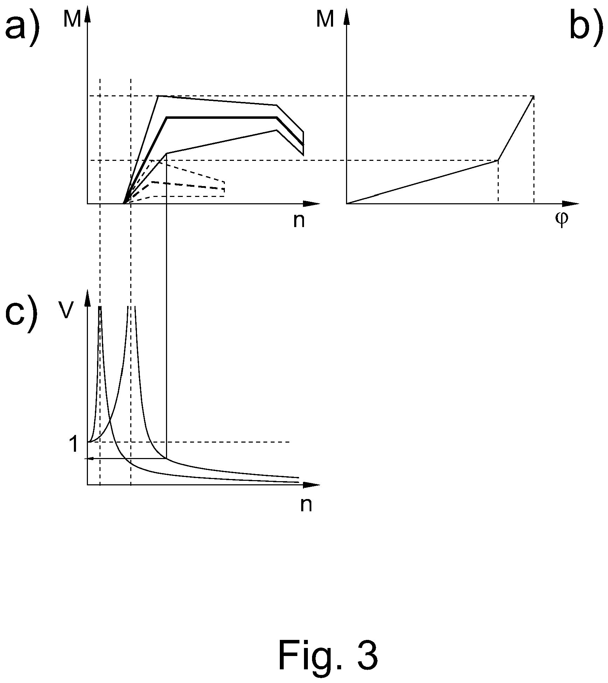

In Fig. 3b) ist deutlich zu sehen, dass die Steifigkeit der zweiten Stufe, die ja beim Vollzylindermotor in der Volllast eine gute Entkopplung gewährleistet, beibehalten wurde, während die erste Stufe steifer als in Fig. 2 abgestimmt wurde, so dass der Abschaltbetrieb immer in dieser ersten Stufe erfolgen kann.

Dadurch wird selbst nach der Ordnungsanpassung für den Abschaltbetrieb ein Übertragungsverhältnis von <1 und damit eine Schwingungsentkopplung erreicht.

Eine Auslenkungsmassenpendeleinheit, allgemein Tilger, besteht aus einer Masse als dynamischen und einer Steifigkeit als statischen Energiespeicher. Seine Eigenfrequenz ist so abgestimmt, dass bei ihrer Anregung das Bauteil, an das der Tilger angebunden ist, keine Auslenkung erfährt.

Die Steifigkeit kann konstant sein, so dass sich ein Festfrequenztilger ergibt, oder drehzahlabhängig sein, wodurch sich ein Ordnungstilger, auch drehzahladaptiver Tilger genannt, ergibt. Ein Festfrequenztilger tilgt nur eine feste Frequenz, während der Ordnungstilger eine Ordnung tilgt.

Besonders verbreitet im KFZ sind die Ordnungstilger in Form des Fliehkraftpendels, die zur Tilgung der hauptanregenden Ordnung ausgelegt sind. Da, wie oben beschrieben, sich die hauptanregende Ordnung bei Zylinderabschaltung oder Brennverfahrenumschaltung, allgemein Änderung der Betriebsart, ändert, kann ein einzelner Tilger den Antriebsstrang nicht mehr beruhigen. Es entsteht sogar die Gefahr, dass bei Anlegen einer "falschen" Anregungsordnung der Tilger aufgrund seiner beiden Eigenfrequenzen zu Resonanzen anfacht.

Eine Lösung besteht darin, für jede der möglichen Ordnungen speziell abgestimmte Tilger zu verbauen.

Dabei sind einzelne Tilger für alle auftretenden bzw. kritischen Ordnungen einzusetzen. Im Falle des 4-Zylinder-Motors, der zu einem 2-Zylinder-Motor reduziert wird, benötigt man Tilger mit einer Abstimmung auf die 2. und die 1. Ordnung.

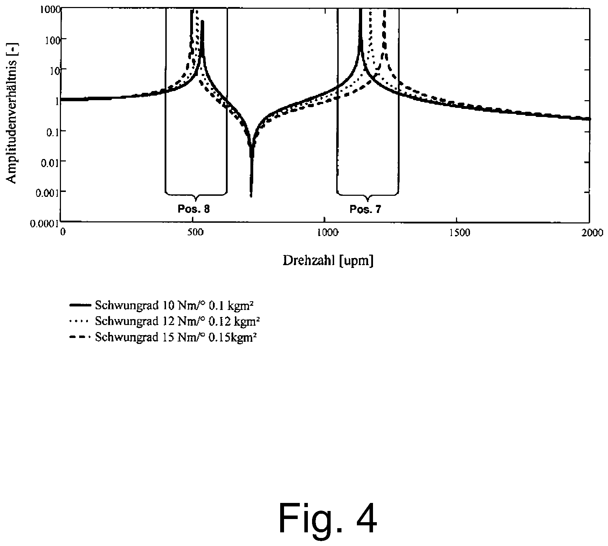

Wie in Fig. 4 dargestellt ist, besitzt ein Tilger neben seiner Tilgungsfrequenz zwei Eigenfrequenzen, bei denen seine Amplitude sehr groß werden kann. Der Abstand dieser Eigenfrequenzen von der Tilgungsfrequenz bezogen auf die Drehzahl hängt von der Masse bzw. dem Massenträgheitsverhältnis ab. Je größer die Trägheit des Tilgers, desto größer ist auch der Abstand. Dabei muss natürlich berücksichtigt werden, dass zur Beibehaltung der Tilgungsfrequenz/-ordnung die Steifigkeit an die Masse/das Massenträgheitsmoment angepasst werden muss. Das Verhältnis aus Steifigkeit und Masse muss gleich bleiben.

Dasselbe Verhalten zeigt ein Ordnungstilger, wie z.B. ein Fliehkraftpendel (Drehzahladaptiver Tilger), wenn man statt der Frequenz die Ordnung auf der Abszisse aufträgt.

Bezogen auf die Zylinderabschaltung bedeutet das, dass bei Halbierung der Anregungsordnung genau eine der unteren Resonanzen bzw. Resonanzordnungen des Tilgers getroffen werden kann, was zur Zerstörung des Tilgers oder zu einer Schwingungsanregung durch den Tilger führen kann.

Die Lösung besteht darin, dass die Trägheit der Tilgermasse entweder kleiner als beispielsweise 90%, vorzugsweise 75%, am meisten bevorzugt 50%, des Schwungrades, allgemein eine Schwungmassenanordnung, ist, um bei Ordnungsreduzierung deutlich unterhalb der unteren Tilgerresonanz zu bleiben, oder deutlich größer als 110%, vorzugsweise 150%, am meisten bevorzugt 200%, um im Umschaltbetrieb noch oberhalb der Tilgerresonanz zu arbeiten.

Der Wert "200%" wird sich aus Bauraum- und Gewichtsgründen oft nur schwer einstellen lassen, während der Wert "50%" seine Grenze im Energiespeichervermögen des Tilgers findet; insbesondere ein drehzahladaptiver Tilger benötigt eine hinreichend große Masse, da er seine Steifigkeit aus der Fliehkraft bezieht.

Das in Fig. 4 gezeigte Verhalten gilt für jeden Tilger, der mit seiner speziellen Tilgungsfrequenz bzw. -ordnung im Schwingungsreduzierungssystem eingesetzt wird.

Darüber hinaus gilt die geschilderte Problematik auch für den umgekehrten Fall. Wenn beispielsweise ein Tilger auf die 2. Ordnung und einer auf die 1. Ordnung abgestimmt bei einem 4-Zylindermotor eingesetzt werden, so besteht für den Tilger der 1. Ordnung, der für den Abschaltbetrieb (2-Zylinderbetrieb) wirken soll, die Gefahr, dass seine obere Resonanzfrequenz bzw. -ordnung im 4-Zylinderbetrieb genau von der Hauptanregenden getroffen wird. Also muss auch hier durch eine geeignete Masse bzw. Massenträgheitsmoment (z.B. <50% oder >> 200%) ein hinreichend großer Frequenz- bzw. Ordnungsabstand sichergestellt sein. Es muss also bei den Auslegungen der Ordnungen bzw. Frequenzen für die Tilger für den Vollzylinder- und den Abschaltbetrieb sichergestellt sein, dass die Frequenz-/Ordnungsbereiche bei 7 und bei 8 aller Tilger nicht getroffen werden.

Insbesondere beim Tilger bietet es sich an, eine gute Vorentkopplung durch einen Tiefpassfilter, also z.B. Zweimassenschwunggrad, vorzuschalten, um mit dem Tilger nur noch das verbleibende Restwechselmoment, das eine sehr kleine Amplitude hat, zu kompensieren. Damit sind auch Tilger mit kleiner Masse und damit kleiner Energieaufnahmemöglichkeit in der Lage, in beiden Betriebszuständen einen hinreichenden Komfort zu gewährleisten.

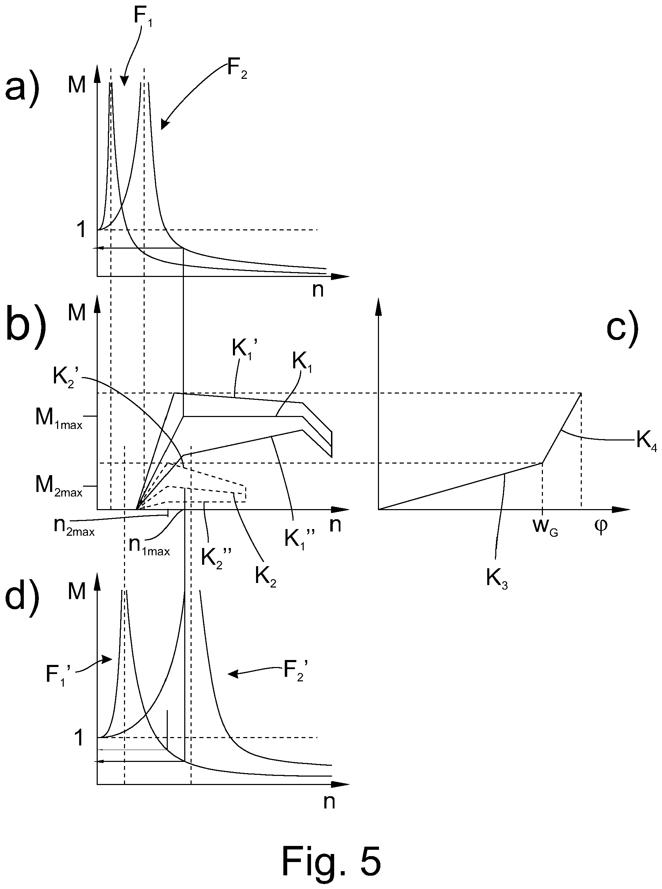

Die erfindungsgemäße Auslegung einer Drehschwingungsdämpferanordnung mit einer Primärseite und einer gegen die Wirkung einer Dämpferelementenanordnung bezüglich der Primärseite drehbaren Sekundärseite, also beispielsweise aufgebaut nach Art eines Zweimassenschwungrads, wird nachfolgend mit Bezug auf die Fig. 5 bis 12 noch einmal detailliert erläutert.

In Fig. 5b) repräsentiert die Kurve K₁ aufgetragen über der Drehzahl n des Verbrennungsmotors 5 das von diesem jeweils abgegebene bzw. für eine jeweilige Drehzahl maximal abgebbare Drehmoment. Bei einer Maximaldrehmomentendrehzahl n₁ₘₐₓ gibt der Verbrennungsmotor 5 in der Betriebsart mit größter Leistungsfähigkeit, also dann, wenn alle Zylinder betrieben werden, das Maximalnennmoment Mₘₐₓ ab, wenn beispielsweise durch entsprechende Betätigung eines Gaspedals die Abgabe eines derart hohen Lastdrehmoments gefordert wird. Die einhüllenden Kurven K₁' und K₁" veranschaulichen den Drehmomentenbereich um die Momentenkennlinie K₁, in welchem bei Auftreten von Drehungleichförmigkeiten, beispielsweise Drehschwingen, das Drehmoment durch Überlagerung eines oszillierenden Teils variiert.

Die Kurve K₂ zeigt den Drehmomentenverlauf für eine Betriebsart mit geringerer Leistungsfähigkeit, beispielsweise eine Betriebsart, in der die Hälfte der Zylinder des Verbrennungsmotors 5 abgeschaltet ist. Bei einer etwas niedrigeren Maximaldrehmomentendrehzahl n₂ₘₐₓ kann bei entsprechender Lastdrehmomentanforderung der Verbrennungsmotor 5 ein Maximalnennmoment M₂ₘₐₓ abgeben. Auch hier existiert ein durch die Kennlinien K₂' und K₂" eingefasster Bereich, in welchem das Drehmoment in der Betriebsart mit geringerer Leistungsfähigkeit variieren kann.

Die Fig. 5c) zeigt die Winkel-Drehmoment-Kennlinie einer Drehschwingungsdämpfungsanordnung, beispielsweise Zweimassenschwungrad, mit zwei Kennlinienabschnitten K₃ und K₄. Bis zu einem Grenzrelativdrehwinkel W_{G} wirkt im Wesentlichen eine erste Dämpferstufe mit dem flacheren Kennlinienabschnitt K₃. Über dem Grenzdrehwinkel W_{G} wirkt im Wesentlichen eine zweite Dämpferstufe mit dem steileren Kennlinienabschnitt K₄. Dies bedeutet, dass in der ersten Dämpferstufe die Drehschwingungsdämpfungsanordnung eine geringere Steifigkeit, repräsentiert durch eine geringere Federkonstante, aufweist, als in der zweiten Dämpferstufe. Der Übergang zwischen den beiden Dämpferstufen bzw. Federstufen, also der Grenz-Relativdrehwinkel W_{G} ist so gewählt, dass in der Betriebsart mit geringerer Leistungsfähigkeit das maximal übertragbare Maximaldrehmoment, also das Maximalnennmoment M₂ₘₐₓ plus dem durch Drehungleichförmigkeiten noch hinzu kommenden Momentenanteil, noch durch die erste Dämpferstufe bzw. Federstufe, also im Kennlinienabschnitt K₃, übertragen werden kann. Erst dann, wenn das zu übertragende Lastdrehmoment noch höher wird, was grundsätzlich nur in der Betriebsart mit höherer bzw. maximaler Leistungsfähigkeit der Fall sein kann, wird die zweite Dämpferstufe bzw. Federstufe mit dem Kennlinienabshnitt K₄ wirksam.

Die Fig. 5a) repräsentiert für den Zustand, in welchem der Verbrennungsmotor 5 in der Betriebsart mit größerer bzw. maximaler Leistungsfähigkeit betrieben wird, die jeweilige Übertragungsfunktion F₁ für die erste, also weniger steife Dämpferstufe und F₂ für die zweite, also steifere Dämpferstufe. Da bei einem Viertaktmotor als kritische Anregungsordnung die zweite Ordnung betrachtet wird, ist die Drehzahlskala halbiert. Dies bedeutet, dass beispielsweise bei Betrachtung der Maximaldrehmomentendrehzahl n₁ₘₐₓ hinsichtlich der zweiten Ordnung die Übertragungsfunktion F₂ bei einer Frequenz bzw. Drehzahl zu betrachten ist, welche dem Doppelten der Drehzahl n₁ₘₐₓ entspricht. Bei dieser Drehzahl hat die Übertragungsfunktion, repräsentiert durch die Kurve F₂, einen Wert von deutlich unter 1, was zeigt, dass an der Sekundärseite, also im Ausgangsbereich der Drehschwingungsdämpfungsanordnung, Drehungleichförmigkeiten bezüglich der Primärseite bzw. im Eingangsbereich deutlich gemindert sind. Es sei allgemein darauf hingewiesen, dass die Übertragungsfunktionen F₁ bzw. F₂ allgemein das Amplitudenverhältnis von Ausgangsdrehungleichförmigkeit zu Eingangsdrehungleichförmigkeit, beispielsweise repräsentiert durch die Drehbeschleunigung, die Drehwinkelgeschwindigkeit, den Drehwinkel oder das Drehmoment, wiedergibt. Nimmt diese Übertragungsfunktion den Wert 1 an, so findet keine Dämpfung statt, bei Werten größer als 1 findet eine Verstärkung von Schwingungen statt, die im Bereich der Resonanzstelle maximal sein kann, und bei Werten unter 1 findet eine Schwingungsdämpfung statt.

Fig. 5b) veranschaulicht für die Betriebsart mit geringerer Leistungsfähigkeit, also beispielsweise dann, wenn die Hälfte der Zylinder abgeschaltet ist, die Übertragungsfunktionen F₁' bzw. F₂' für die beiden Dämpfer- bzw. Federstufen. Da durch die in Fig. 5c) dargestellte Kennlinienauslegung in der Betriebsart mit geringerer Leistungsfähigkeit die zweite Dämpferstufe mit dem Kennlinienabschnitt K₄ grundsätzlich nicht mehr aktiv werden kann, ist die Übertragungsfunktion F₂' irrelevant. Der Umstand, dass deren Resonanzstelle sehr nahe bei der Maximaldrehmomentendrehzahl n₂ₘₐₓ liegt, kann also unberücksichtigt bleiben.

Es sei hier darauf hingewiesen, dass aufgrund des Umstandes, dass bei Abschaltung der Hälfte der Zylinder nicht mehr die zweite Ordnung, sondern die erste Ordnung als besonders kritisch hinsichtlich der Schwingungsanregung zu betrachten ist, in der Fig. 5d) keine Anpassung in der Skalierung der Drehzahl erforderlich ist.

Man erkennt in Fig. 5d), dass dann, wenn in der Betriebsart mit geringerer Leistungsfähigkeit das maximale Drehmoment abgegeben wird, welches dem Maximalnennmoment M₂ₘₐₓ plus dem durch Schwingungsanregung hinzu kommenden Momentenanteil entspricht, die Übertragungsfunktion F₁', also das Verhältnis einer Schwingungsgröße an der Ausgangsseite bzw. Sekundärseite zu einer Schwingungsgröße an der Primärseite bzw. dem Eingangsbereich, deutlich unter 1 liegt. Dies bedeutet, dass auch in der Betriebsart mit geringerer Leistungsfähigkeit für alle zu übertragenden Lastdrehmomente ein ausreichender Abstand zur Resonanzstelle der Übertragungsfunktion F₁' gewährleistet werden kann. Vorteilhafterweise wird durch Auslegung der Steifigkeiten bzw. Masseverhältnisse dafür gesorgt, dass in jeder der Betriebsarten der zu erwartende Betriebsdrehzahlbereich um einen Faktor 2^{0,5} über der jeweiligen Resonanzstelle der zu berücksichtigenden Übertragungsfunktion liegt.

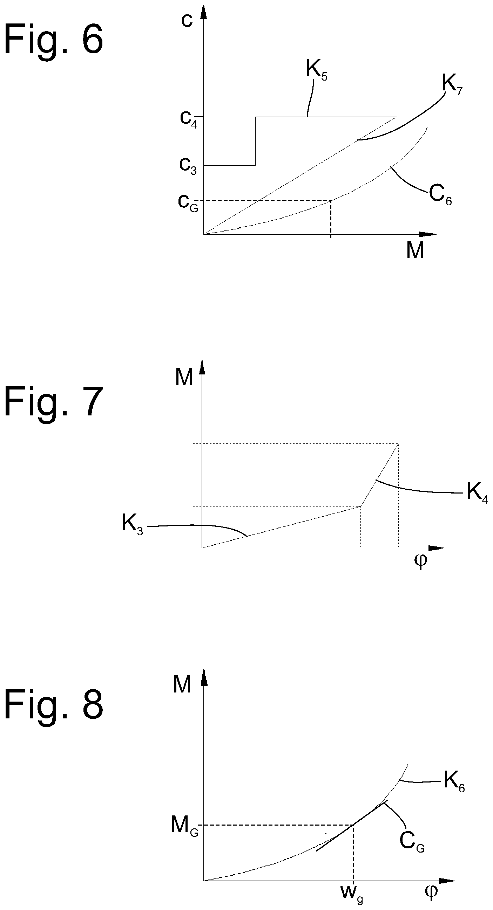

Die Fig. 6 bis 8 veranschaulichen verschiedene Ausgestaltungsvarianten der Drehschwingungsdämpfungsanordnung hinsichtlich der Auslegung der Steifigkeit derselben. So zeigt die Fig. 6 den vorangehend bereits beschriebenen Verlauf der Winkel-Moment-Kennlinie mit den Kennlinienabschnitten K₃ und K₄. In Fig. 6 ist dieser Verlauf repräsentiert durch eine gestufte Kurve K₅, die in Zuordnung zum Kennlinienabschnitt K₃ eine durch die Steigung des Kennlinienabschnitts K₃ repräsentierte Steifigkeit c₃ bereitstellt und in Zuordnung zum Kennlinienabschnitt K₄ eine größere Steifigkeit c₄ veranschaulicht.

Die in Fig. 8 aufgetragene Kennlinie K₆ repräsentiert eine progressiv zunehmende Steifigkeit, welche in dem Diagramm der Fig. 6 durch eine entsprechend progressiv zunehmende Steifigkeitskurve c₆ repräsentiert ist. In der Fig. 8 repräsentiert der Winkel W_{G} den Grenz-Relativdrehwinkel, welchem eine Grenzsteifigkeit c_{G} zugeordnet ist. Dieser ist zum Ausdruck gebracht durch die Steigung einer Tangentenlinie an der Kennlinie K₆ bei dem Grenz-Relativdrehwinkel. Dieser Grenz-Relativdrehwinkel W_{G} identifiziert ein Lastdrehmoment M_{G}, welches beispielsweise dem in der Betriebsart mit geringerer Leistungsfähigkeit maximal abgebbaren, also über die Drehschwingungsdämpfungsanordnung zu übertragenden Maximaldrehmoment (Nennmoment + Schwingungsanteil) entsprechen kann. Dies bedeutet, dass die Grenzsteifigkeit diejenige Steifigkeit ist, welche in der Betriebsart mit geringerer Leistungsfähigkeit durch das in dieser Betriebsart maximal abgebbare bzw. zu übertragende Lastdrehmoment noch genutzt werden kann. Durch Auslegung der Dämpferelementenanordnung der Drehschwingungsdämpfungsanordnung kann auch dabei dafür gesorgt werden, dass die Resonanzstelle der Übertragungsfunktion, ähnlich wie dies in Fig. 5d) veranschaulicht ist, ausreichend weit unter der Maximaldrehmomentendrehzahl ist, um zu gewährleisten, dass die Übertragungsfunktion bei dieser Drehzahl einen Wert von deutlich unter 1 aufweist.

In Fig. 6 veranschaulicht eine Kurve K7 eine ebenfalls über dem anliegenden Lastdrehmoment ansteigende, hier linear ansteigende Steifigkeit, wobei die Änderungsrate dieser Steifigkeit so gewählt ist, dass gleichermaßen bei Erreichen des Grenz-Relativdrehwinkels eine entsprechende Grenzsteifigkeit vorhanden ist. Im Falle einer gestuften Steifigkeitskennlinie K₅ entspricht die in der Dämpferstufe bzw. Federstufe mit dem Kennlinienabschnitt K₃ mit der dort wirksamen Steifigkeit bzw. Federkonstante c₃ der Grenzsteifigkeit.

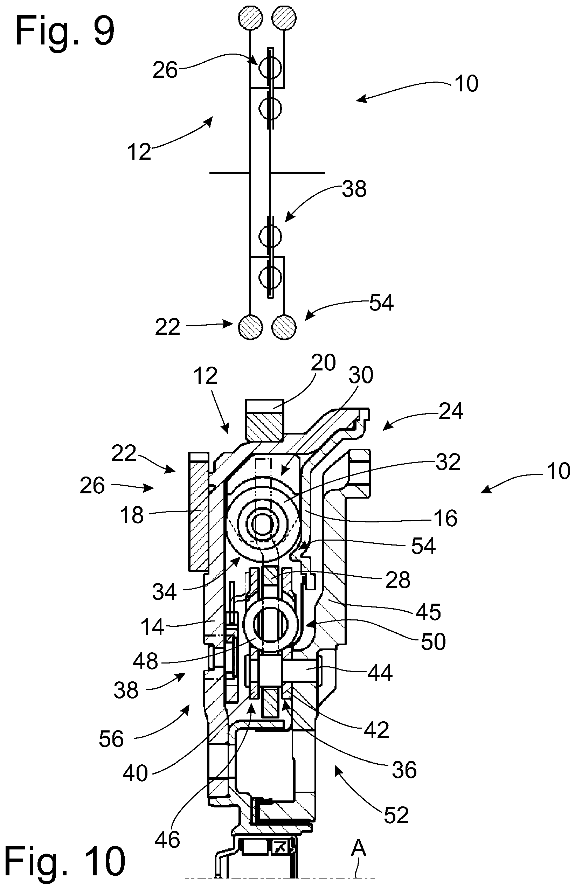

Eine Drehschwingungsdämpfungsanordnung mit zwei Dämpferstufen bzw. Federstufen wird nachfolgend mit Bezug auf die Fig. 9 und 10 anhand der Prinzipdarstellung der Fig. 9 und anhand der konstruktiven Ausführung der Fig. 10 erläutert.

Die Drehschwingungsdämpfungsanordnung 10 umfasst einen beispielsweise mit der Kurbelwelle des Verbrennungsmotors 5 zu verbindenden Eingangsbereich 12, welcher bei der konstruktiven Ausführung zwei Deckscheibenelemente 14 und 16 umfasst. Diese stellen in Verbindung mit einem oder mehreren daran vorgesehenen Masseteilen 18 und einem Anlasserzahnkranz 20 im Wesentlichen eine eingangsseitige Schwungmasse 22 bereit.

Dabei bilden die Deckscheibenelemente 14, 16 im Wesentlichen auch die Primärseite 24 einer in diesem Ausgestaltungsbeispiel weiter radial außen liegenden Dämpferstufe 26.

Axial zwischen den beiden Deckscheibenelementen 14, 16 liegt ein Zentralscheibenelement 28. Mit seinem radial äußeren Bereich stellt dieses im Wesentlichen eine Sekundärseite 30 der Dämpferstufe 26 bereit. Am Zentralscheibenelement 28 und den Deckscheibenelementen 14, 16 stützen sich in Umfangsrichtung die Federn 32 einer der Dämpferstufe 26 zugeordneten Federstufe 34 ab. Durch Kompression dieser Federn 32 können die Primärseite 24 und die Sekundärseite 30 sich um eine Drehachse A bezüglich einander verdrehen. In seinem radial inneren Bereich bildet das Zentralscheibenelement 28 die Primärseite 36 für eine weiter radial innen liegende Dämpferstufe 38. Dort liegen axial beidseits des Zentralscheibenelements 28 zwei weitere Deckscheibenelemente 40, 42, die durch Nietbolzen 44 mit einem Schwungrad 45 fest verbunden sind und im Wesentlichen die Sekundärseite 46 der Dämpferstufe 38 bereitstellen.

An dem Zentralscheibenelement 28 und den weiteren Deckscheibenelementen 40, 42 stützen sich die Federn 48 einer der Dämpferstufe 38 zugeordneten Federstufe 50 ab. Durch Kompression dieser Federn 48 können die Primärseite 36 und die Sekundärseite 46 der zweiten Dämpferstufe 38 sich um die Drehachse A bezüglich einander drehen.

Das Schwungrad 45 bildet im Wesentlichen zusammen mit den weiteren Deckscheibenelementen 40, 42 eine ausgangsseitige Schwungmasse 52, während das Zentralscheibenelement 28 im Wesentlichen eine zwischen den beiden Dämpferstufen 26, 38 liegende Zwischenmasse 54 bereitstellt.

Mit dem in Fig. 9 in prinzipieller Weise und in Fig. 10 in konstruktiver Ausführung dargestellten Aufbau, bei welchem die Primärseite 24 der radial äußeren Dämpferstufe 26 im Wesentlichen auch die Primärseite der Drehschwingungsdämpfungsanordnung 10 bereitstellt und die Sekundärseite 46 der radial inneren Dämpferstufe 38 im Wesentlichen auch die Sekundärseite der Drehschwingungsdämpfungsanordnung 10 bereitstellt, bilden die beiden Federstufen 34, 50 mit ihren jeweiligen Federn 32, 48 allgemein eine Dämpferelementenanordnung 56, deren Steifigkeit so ausgelegt sein kann, wie vorangehend dargestellt. Das heißt, es könnte beispielsweise die baulich weiter innen liegende und somit kleiner dimensionierte Dämpferstufe 38 durch entsprechende Auslegung bzw. Ausgestaltung der Federn 48 den Kennlinienabschnitt K₃ in Fig. 5c) bereitstellen. Die radial weiter außen liegend und somit baulich auch größer dimensionierte Dämpferstufe 34 könnte durch Ausgestaltung der Federn 32 den Kennlinienabschnitt K₄ in Fig. 5c) bereitstellen. Selbstverständlich könnte jede der Dämpferstufen 26, 38 auch in sich durch entsprechende Anordnung mehrerer seriell bzw. auch parallel wirksamer Federn mit gestuftem Kennlinienverlauf ausgebildet sein, so dass der Verlauf der Fig. 5c) grundsätzlich auch bei Bereitstellung einer Dämpferelementenanordnung mit nur einer Federstufe, also bei Aufbau der Drehschwingungsdämpfungsanordnung 10 mit nur einer Dämpferstufe, realisiert sein kann.

Auch könnte in einem derartigen Aufbau die beispielsweise in Fig. 6 bzw. in Fig. 8 erkennbare Ausgestaltung mit kontinuierlich zunehmender Steifigkeit bzw. Federkonstante, entweder linear oder progressiv ansteigend, realisiert sein. Dies kann beispielsweise durch Schraubendruckfedern mit variierender Ganghöhe bzw. variierendem Windungsdurchmesser erreicht werden. Auch kann der durch die Kurven K₆ bzw. C₆ dargestellte progressiv ansteigende Verlauf zumindest angenähert durch eine Mehrzahl von seriell wirksamer Federstufen jeweils mit linearem Kennlinienverlauf angenähert werden.

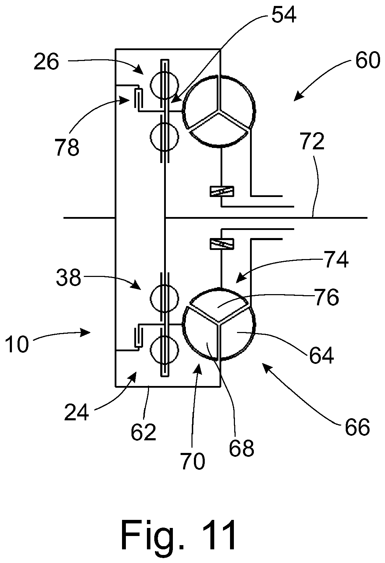

Die Fig. 11 zeigt die Integration einer derartigen Drehschwingungsdämpfungsanordnung 10 in ein Anfahrelement, hier beispielsweise einen hydrodynamischen Drehmomentwandler 60. Dessen Gehäuse 62 ist an die Kurbelwelle des Verbrennungsmotors 5 anzubinden und stellt mit Pumpenradschaufeln 64 ein eingangsseitiges Pumpenrad 66 bereit. Im Inneren des allgemein mit Fluid gefülltem Gehäuses ist ein mit Turbinenradschaufeln 68 versehenes Turbinenrad 70 vorgesehen, das über die Drehschwingungsdämpfungsanordnung 10 bzw. die weiter radial innen liegende Dämpferstufe 38 an eine Getriebeeingangswelle 72 angekoppelt ist. Zwischen dem Pumpenrad 66 und dem Turbinenrad 70 liegt ein Leitrad 74 mit seinen Leitradschaufeln 76.

Der Eingangsbereich bzw. die Primärseite 24 der Drehschwingungsdämpfungsanordnung 10 ist über eine allgemein mit 78 bezeichnete Überbrückungskupplung an das Gehäuse ankoppelbar, so dass bei eingerückter Überbrückungskupplung 78 das Drehmoment seriell über die beiden Dämpferstufen 26, 38 zur Getriebeeingangswelle 72 übertragen wird. In diesem Zustand, in welchem der zwischen dem Pumpenrad 66, dem Turbinenrad 70 und dem Leitrad 74 aufgebaute hydrodynamische Kreislauf nicht aktiv ist, trägt das Pumpenrad 70 zur Erhöhung der Zwischenmasse 54 bei. Bei ausgerückter Überbrückungskupplung wird das Drehmoment über das Pumpenrad 66 und das Turbinenrad 70 auf die Zwischenmasse 54 bzw. die zweite Dämpferstufe 38 und von dieser auf die Getriebeeingangswelle 72 übertragen.

## Patentansprüche

1. Antriebssystem für ein Fahrzeug, umfassend eine Brennkraftmaschine (5) und eine Drehschwingungsdämpfungsanordnung (10), wobei die Brennkraftmaschine (5) zwischen Betriebsarten unterschiedlicher Leistungsfähigkeit umschaltbar ist und wobei die Drehschwingungsdämpfungsanordnung (10) eine vorzugsweise mit einer Kurbelwelle gekoppelte Primärseite (24, 36) und eine gegen die Wirkung einer Dämpferelementenanordnung (34, 50) bezüglich der Primärseite (24, 36) drehbare Sekundärseite (30, 46) umfasst, wobei die Dämpferelementenanordnung (34, 50) eine mit zunehmendem zu übertragenden Lastdrehmoment zunehmende Steifigkeit aufweist, wobei bei Übertragung eines in einer Betriebsart mit geringerer Leistungsfähigkeit bei einer Maximaldrehmomentendrehzahl (n₂ₘₐₓ) abgebbaren Maximaldrehmoments die Primärseite (24, 36) und die Sekundärseite (30, 46) in einer Grenz-Relativdrehlage (W_{G}) bezüglich einander sind und wobei die Dämpferelementenanordnung (34, 50) in der Grenz-Relativdrehlage (W_{G}) eine derartige Grenz-Steifigkeit bereitstellt, dass eine Eigenfrequenz der Drehschwingungsdämpferanordnung (10) unter der Maximaldrehmomentenzahl (n₂ₘₐₓ) iSt.

2. Antriebssystem nach Anspruch 1, **dadurch gekennzeichnet, dass** bei Übertragung des Maximaldrehmoments das Verhältnis einer Schwingungsgröße an der Sekundärseite (30, 46) zu einer Schwingungsgröße an der Primärseite (24, 36) kleiner als 1 ist.

3. Antriebssystem nach Anspruch 1 oder 2, **dadurch gekennzeichnet, dass** die Steifigkeit der Dämpferelementenanordnung (34, 50) mit zunehmendem Lastdrehmoment wenigstens bereichsweise im Wesentlichen linear zunimmt.

4. Antriebssystem nach einem der Ansprüche 1 bis 3, **dadurch gekennzeichnet, dass** die Steifigkeit der Dämpferelementenanordnung (34, 50) mit zunehmendem Lastdrehmoment wenigstens bereichsweise progressiv zunimmt.

5. Antriebssystem nach einem der Ansprüche 1 bis 4, **dadurch gekennzeichnet, dass** die Dämpferelementenanordnung (34, 50) wenigstens zwei Federstufen (34, 50) umfasst, wobei eine erste Federstufe (50) mit geringerer Steifigkeit im Wesentlichen in einem ersten Relativdrehwinkelbereich zwischen Primärseite (24, 36) und Sekundärseite (30, 46) und eine zweite Federstufe (34) mit größerer Steifigkeit im Wesentlichen in einem zweiten Relativdrehwinkelbereich zwischen Primärseite (24, 36) und Sekundärseite (30, 46) wirksam ist, wobei ein zur Erzeugung eines Übergangs vom ersten Drehwinkelbereich zum zweiten Drehwinkelbereich anzulegendes Lastdrehmoment wenigstens dem von der Brennkraftmaschine in einer Betriebsart mit geringerer Leistungsfähigkeit abgebbaren Maximaldrehmoment entspricht.

6. Antriebssystem nach einem der Ansprüche 1 bis 5, **dadurch gekennzeichnet, dass** die Betriebsarten einen ersten Betriebszustand mit Betrieb aller Zylinder und wenigstens einen zweiten Betriebszustand mit Betrieb nur eines Teils der Zylinder umfassen.

7. Antriebssystem nach einem der Ansprüche 1 bis 5, **dadurch gekennzeichnet, dass** die Betriebsarten einen Zweitaktbetrieb und einen Viertaktbetrieb umfassen.

8. Antriebssystem nach einem der Ansprüche 1 bis 7, dass die Drehschwingungsdämpfungsanordnung ferner eine Schwungmassenanordnung sowie wenigstens eine Auslenkungsmassenpendeleinheit mit einem Auslenkungsmassenträger und einer durch eine Auslenkungsmassenkopplungsanordnung an dem Auslenkungsmassenträger bezüglich diesem aus einer Grund-Relativlage auslenkbar getragenen Auslenkungsmassenanordnung umfasst.

9. Antriebssystem nach Anspruch 8, **dadurch gekennzeichnet, dass** wenigstens eine Auslenkungmassenpendeleinheit als Fliehkraft-Masse-Pendeleinheit ausgebildet ist, wobei bei Auslenkung der Auslenkungsmassenanordnung aus der Grund-Relativlage bezüglich des Auslenkungsmassenträgers ein Radialabstand der Auslenkungsmassenanordnung bezüglich einer Drehachse sich verändert.

10. Antriebssystem nach Anspruch 9, **dadurch gekennzeichnet, dass** an dem Auslenkungsmassenträger oder/und der Auslenkungsmassenanordnung wenigstens eine Führungsbahn mit einem Scheitelbereich vorgesehen ist und dass die Auslenkungsmassenkopplungsanordnung ein entlang der Führungsbahn bewegbares Kopplungsorgan umfasst, wobei bei Auslenkung der Auslenkungsmassenanordnung aus der Grund-Relativlage das Kopplungsorgan sich ausgehend vom Scheitelbereich einer im Auslenkungsmassenträger vorgesehenen Führungsbahn oder/und einer in der Auslenkungsmassenanordnung vorgesehenen Führungsbahn bewegt.

11. Antriebssystem nach einem der Ansprüche 8 bis 10, **dadurch gekennzeichnet, dass** wenigstens eine Auslenkungsmassenpendeleinheit als Feder-Masse-Pendeleinheit ausgebildet ist, wobei die Auslenkungsmassenkopplungsanordnung eine bezüglich des Auslenkungsmassenträgers und der Auslenkungsmassenanordnung abgestützte oder abstützbare Federanordnung umfasst.

12. Antriebssystem nach einem der Ansprüche 8 bis 11, **dadurch gekennzeichnet, dass** wenigstens eine Auslenkungsmassenpendeleinheit umfasst:
einen um eine Drehachse drehbaren Auslenkungsmassenträger,
eine bezüglich des Auslenkungsmassenträgers in Umfangsrichtung um die Drehachse auslenkbaren Auslenkungsmassenanordnung,
ein in einem Trägerabstützbereich bezüglich des Auslenkungsmassenträgers und in einem Auslenkungsmassenabstützbereich bezüglich der Auslenkungsmassenanordnung abgestütztes oder abstützbares, verformbares Rückstellelement, wobei eine Auslenkung der Auslenkungsmassenanordnung aus einer Grund-Relativlage bezüglich des Auslenkungsmassenträgers in wenigstens einer Richtung eine Verformung des Rückstellelements bewirkt, und
ein am Auslenkungsmassenträger radial bewegbar getragenen und den Trägerabstützbereich bereitstellendes Abstützelement, wobei durch Bewegung des Abstützelements am Auslenkungsmassenträger ein Abstand zwischen dem Trägerabstützbereich und dem Auslenkungsmassenabstützbereich veränderbar ist und das Abstützelement in Richtung zu einer radial inneren Basislage vorgespannt ist und bei Drehung des Auslenkungsmassenträgers um die Drehachse entgegen der Vorspannung unter Fliehkrafteinwirkung ausgehend von der Basislage nach radial außen verlagerbar ist.

13. Antriebssystem nach einem der Ansprüche 8 bis 12, **dadurch gekennzeichnet, dass** ein Massenträgheitsmoment der Auslenkungsmassenanordnung entweder kleiner als 90% eines Massenträgheitsmoments der Schwungmassenanordnung ist oder größer als 110% des Massenträgheitsmoments der Schwungmassenanordnung ist.

14. Antriebssystem nach einem der Ansprüche 8 bis 13, **dadurch gekennzeichnet, dass** das Massenträgheitsmoment der Auslenkungsmassenanordnung entweder kleiner als 75%, vorzugsweise 50%, des Massenträgheitsmoments der Schwungmassenanordnung ist oder größer als 150%, vorzugsweise 200%, des Massenträgheitsmoments der Schwungmassenanordnung ist.

15. Antriebssystem nach einem der Ansprüche 8 bis 14, **dadurch gekennzeichnet, dass** die Drehschwingungsdämpfungsanordnung den Auslenkungsmassenträger bereitstellt.

## Claims

1. Drive system for a vehicle, comprising an internal combustion engine (5) and a torsional vibration damping arrangement (10), it being possible for the internal combustion engine (5) to be switched over between operating modes of different performance, and the torsional vibration damping arrangement (10) comprising a primary side (24, 36) which is preferably coupled to a crankshaft, and a secondary side (30, 46) which can be rotated with regard to the primary side (24, 36) counter to the action of a damper element arrangement (34, 50), the damper element arrangement (34, 50) having a stiffness which increases as the load torque to be transmitted increases, the primary side (24, 36) and the secondary side (30, 46) being in a limit relative rotational position (W_{G}) with regard to one another in the case of the transmission of a maximum torque which can be output at a maximum torque rotational speed (n₂ₘₐₓ) in an operating mode with a relatively low performance, and, in the limit relative rotational position (W_{G}), the damper element arrangement (34, 50) providing a limit stiffness which is such that a natural frequency of the torsional vibration damper arrangement (10) is below the maximum torque value (n₂ₘₐₓ).

2. Drive system according to Claim 1, **characterized in that**, in the case of a transmission of the maximum torque, the ratio of a vibration variable on the secondary side (30, 46) to a vibration variable on the primary side (24, 36) is less than 1.

3. Drive system according to Claim 1 or 2, **characterized in that** the stiffness of the damper element arrangement (34, 50) increases in a substantially linear manner at least in regions as the load torque increases.

4. Drive system according to one of Claims 1 to 3, **characterized in that** the stiffness of the damper element arrangement (34, 50) increases in a progressive manner at least in regions as the load torque increases.

5. Drive system according to one of Claims 1 to 4, **characterized in that** the damper element arrangement (34, 50) comprises at least two spring stages (34, 50), a first spring stage (50) with a relatively low stiffness being active substantially in a first relative rotational angular range between the primary side (24, 36) and the secondary side (30, 46), and a second spring stage (34) with a relatively great stiffness being active substantially in a second relative rotational angular range between the primary side (24, 36) and the secondary side (30, 46), a load torque which is to be applied in order to generate a transition from the first rotational angular range to the second rotational angular range corresponding at least to the maximum torque which can be output by the internal combustion engine in an operating mode with a relatively low performance.

6. Drive system according to one of Claims 1 to 5, **characterized in that** the operating modes comprise a first operating state with operation of all the cylinders and at least one second operating state with operation of only part of the cylinders.

7. Drive system according to one of Claims 1 to 5, **characterized in that** the operating modes comprise a two stroke operation and a four stroke operation.

8. Drive system according to one of Claims 1 to 7, in that, furthermore, the torsional vibration damping arrangement comprises a centrifugal mass arrangement and at least one deflection mass pendulum unit with a deflection mass carrier and a deflection mass arrangement which is carried by way of a deflection mass coupling arrangement on the deflection mass carrier such that it can be deflected with regard to the latter out of a basic relative position.

9. Drive system according to Claim 8, **characterized in that** at least one deflection mass pendulum unit is configured as a centrifugal mass pendulum unit, a radial spacing of the deflection mass arrangement with regard to a rotational axis changing in the case of a deflection of the deflection mass arrangement out of the basic relative position with regard to the deflection mass carrier.

10. Drive system according to Claim 9, **characterized in that** at least one guide track with a vertex region is provided on the deflection mass carrier and/or the deflection mass arrangement, and **in that** the deflection mass coupling arrangement comprises a coupling member which can be moved along the guide track, the coupling member moving in the case of a deflection of the deflection mass arrangement out of the basic relative position, starting from the vertex region of a guide track which is provided in the deflection mass carrier and/or a guide track which is provided in the deflection mass arrangement.

11. Drive system according to one of Claims 8 to 10, **characterized in that** at least one deflection mass pendulum unit is configured as a spring/mass pendulum unit, the deflection mass coupling arrangement comprising a spring arrangement which is supported or can be supported with regard to the deflection mass carrier and the deflection mass arrangement.

12. Drive system according to one of Claims 8 to 11, **characterized in that** at least one deflection mass pendulum unit comprises:
a deflection mass carrier which can be rotated about a rotational axis,
a deflection mass arrangement which can be deflected about the rotational axis in the circumferential direction with regard to the deflection mass carrier,
a deformable restoring element which is supported or can be supported in a carrier supporting region with regard to the deflection mass carrier and in a deflection mass supporting region with regard to the deflection mass arrangement, a deflection of the deflection mass arrangement out of a basic relative position with regard to the deflection mass carrier in at least one direction bringing about a deformation of the restoring element, and
a supporting element which is carried in a radially movable manner on the deflection mass carrier and provides the carrier supporting region, a spacing between the carrier supporting region and the deflection mass supporting region being variable by way of a movement of the supporting element on the deflection mass carrier, and the supporting element being prestressed in the direction of a radially inner basic position, and it being possible for the said supporting element to be moved radially to the outside, starting from the basic position, under the action of centrifugal force counter to the prestress in the case of a rotation of the deflection mass carrier about the rotational axis.

13. Drive system according to one of Claims 8 to 12, **characterized in that** a mass moment of inertia of the deflection mass arrangement is either less than 90% of a mass moment of inertia of the centrifugal arrangement or is greater than 110% of the mass moment of inertia of the centrifugal arrangement.

14. Drive system according to one of Claims 8 to 13, **characterized in that** the mass moment of inertia of the deflection mass arrangement is either less than 75%, preferably 50%, of the mass moment of inertia of the centrifugal mass arrangement, or is greater than 150%, preferably 200%, of the mass moment of inertia of the centrifugal mass arrangement.

15. Drive system according to one of Claims 8 to 14, **characterized in that** the torsional vibration damping arrangement provides the deflection mass carrier.

## Revendications

1. Système de propulsion pour un véhicule, comportant un moteur à combustion interne (5) et un ensemble d'amortissement de vibrations de torsion (10), le moteur à combustion interne (5) pouvant être commuté entre deux modes de fonctionnement présentant différentes performances, et l'ensemble d'amortissement de vibrations de torsion (10) comportant un côté primaire (24, 36) accouplé de préférence à un vilebrequin et un côté secondaire (30, 46) pouvant tourner par rapport au côté primaire (24, 36) à l'encontre de l'action d'un ensemble d'éléments d'amortissement (34, 50), l'ensemble d'éléments d'amortissement (34, 50) présentant une rigidité augmentant au fur et à mesure que le couple de charge à transmettre augmente, et lors de la transmission d'un couple maximal pouvant être fourni dans un mode de fonctionnement à performance plus faible pour une vitesse de rotation de couple maximal (n₂ₘₐₓ), le côté primaire (24, 36) et le côté secondaire (30, 46) étant dans une position angulaire relative limite (W_{G}) l'un par rapport à l'autre, et l'ensemble d'éléments d'amortissement (34, 50) produisant, dans la position angulaire relative limite (W_{G}), une rigidité limite telle qu'une fréquence propre de l'ensemble d'amortissement de vibrations de torsion (10) soit inférieure à le nombre de couple maximal (n₂ₘₐₓ).

2. Système de propulsion selon la revendication 1, **caractérisé en ce que** lors de la transmission du couple maximal, le rapport d'une amplitude de vibration au niveau du côté secondaire (30, 46) à une amplitude de vibration au niveau du côté primaire (24, 36) est inférieur à 1.

3. Système de propulsion selon la revendication 1 ou 2, **caractérisé en ce que** la rigidité de l'ensemble d'éléments d'amortissement (34, 50) augmente sensiblement linéairement au moins dans certaines zones au fur et à mesure que le couple de charge augmente.

4. Système de propulsion selon l'une quelconque des revendications 1 à 3, **caractérisé en ce que** la rigidité de l'ensemble d'éléments d'amortissement (34, 50) augmente progressivement au moins dans certaines zones au fur et à mesure que le couple de charge augmente.

5. Système de propulsion selon l'une quelconque des revendications 1 à 4, **caractérisé en ce que** l'ensemble d'éléments d'amortissement (34, 50) comporte au moins deux étages de ressorts (34, 50), un premier étage de ressorts (50) de rigidité plus faible étant actif sensiblement dans une première plage d'angles de rotation relatifs entre le côté primaire (24, 36) et le côté secondaire (30, 46), et un deuxième étage de ressorts (34) de rigidité plus élevée étant actif sensiblement dans une deuxième plage d'angles de rotation relatifs entre le côté primaire (24, 36) et le côté secondaire (30, 46), un couple de charge à appliquer pour générer une transition de la première plage d'angles de rotation à la deuxième plage d'angles de rotation correspondant au moins au couple maximal pouvant être fourni par le moteur à combustion interne dans un mode de fonctionnement à performance plus faible.

6. Système de propulsion selon l'une quelconque des revendications 1 à 5, **caractérisé en ce que** les modes de fonctionnement comportent un premier état de fonctionnement dans lequel tous les cylindres fonctionnent et au moins un deuxième état de fonctionnement dans lequel seulement une partie des cylindres fonctionne.

7. Système de propulsion selon l'une quelconque des revendications 1 à 5, **caractérisé en ce que** les modes de fonctionnement comportent un fonctionnement à deux temps et un fonctionnement à quatre temps.

8. Système de propulsion selon l'une quelconque des revendications 1 à 7, en ce que l'ensemble d'amortissement de vibrations de torsion comporte en outre un ensemble de masse d'inertie ainsi qu'au moins une unité pendulaire de masse de déviation dotée d'un support de masse de déviation et d'un ensemble de masse de déviation supporté au moyen d'un ensemble d'accouplement de masse de déviation sur le support de masse de déviation de manière à pouvoir être dévié par rapport à celui-ci à partir d'une position relative de base.

9. Système de propulsion selon la revendication 8, **caractérisé en ce qu'**au moins une unité pendulaire de masse de déviation est réalisée sous forme d'unité pendulaire de masse centrifuge, et dans lequel, lors de la déviation de l'ensemble de masse de déviation à partir de la position relative de base par rapport au support de masse de déviation, une distance radiale de l'ensemble de masse de déviation par rapport à un axe de rotation varie.

10. Système de propulsion selon la revendication 9, **caractérisé en ce qu'**au moins une voie de guidage dotée d'une zone de sommet est prévue sur le support de masse de déviation et/ou sur l'ensemble de masse de déviation, et **en ce que** l'ensemble d'accouplement de masse de déviation comporte un organe d'accouplement mobile le long de la voie de guidage, et lors de la déviation de l'ensemble de masse de déviation à partir de la position relative de base, l'organe d'accouplement se déplaçant à partir de la zone de sommet d'une voie de guidage prévue dans le support de masse de déviation et/ou d'une voie de guidage prévue dans l'ensemble de masse de déviation.

11. Système de propulsion selon l'une quelconque des revendications 8 à 10, **caractérisé en ce qu'**au moins une unité pendulaire de masse de déviation est réalisée sous forme d'unité pendulaire ressort-masse, l'ensemble d'accouplement de masse de déviation comportant un ensemble de ressorts supporté ou pouvant être supporté par rapport au support de masse de déviation et à l'ensemble de masse de déviation.

12. Système de propulsion selon l'une quelconque des revendications 8 à 11, **caractérisé en ce qu'**au moins une unité pendulaire de masse de déviation comporte :
un support de masse de déviation pouvant tourner autour d'un axe de rotation,
un ensemble de masse de déviation pouvant être dévié dans la direction périphérique autour de l'axe de rotation par rapport au support de masse de déviation,
un élément de rappel déformable supporté ou pouvant être supporté, dans une zone d'appui de support, par rapport au support de masse de déviation et, dans une zone d'appui de masse de déviation, par rapport à l'ensemble de masse de déviation, une déviation de l'ensemble de masse de déviation à partir d'une position relative de base par rapport au support de masse de déviation dans au moins une direction provoquant une déformation de l'élément de rappel, et
un élément d'appui supporté de manière radialement mobile sur le support de masse de déviation et fournissant la zone d'appui de support, une distance entre la zone d'appui de support et la zone d'appui de masse de déviation pouvant être modifiée par déplacement de l'élément d'appui sur le support de masse de déviation, et l'élément d'appui étant précontraint en direction d'une position de base radialement intérieure et étant, à partir de la position de base, déplaçable radialement vers l'extérieur à l'encontre de la précontrainte sous l'effet de la force centrifuge lors de la rotation du support de masse de déviation autour de l'axe de rotation.

13. Système de propulsion selon l'une quelconque des revendications 8 à 12, **caractérisé en ce qu'**un moment d'inertie de masse de l'ensemble de masse de déviation est soit inférieur à 90 % d'un moment d'inertie de masse de l'ensemble de masse d'inertie soit supérieur à 110 % du moment d'inertie de masse de l'ensemble de masse d'inertie.

14. Système de propulsion selon l'une quelconque des revendications 8 à 13, **caractérisé en ce que** le moment d'inertie de masse de l'ensemble de masse de déviation est soit inférieur à 75 %, de préférence à 50 %, du moment d'inertie de masse de l'ensemble de masse d'inertie soit supérieur à 150 %, de préférence à 200 %, du moment d'inertie de masse de l'ensemble de masse d'inertie.

15. Système de propulsion selon l'une quelconque des revendications 8 à 14, **caractérisé en ce que** l'ensemble d'amortissement de vibrations de torsion fournit le support de masse de déviation.
